# EUROPEAN PATENT APPLICATION

(11) **EP 4 390 351 A1**
(43) Date of publication of application: **26.06.2024**
(21) Application number: 23215424.5
(22) Date of filing: 11.12.2023
(51) Int. Cl.: G01L 3/10, B62J 45/411, B62J 45/421, B62M 3/00, B62M 6/50, A63B 24/00

(54) **TORQUE SENSING DEVICE FOR ELECTRIC ASSISTED BICYCLE**

(30) Priority: 23.12.2022 TW 111149724
(71) Applicant: Lai, Shih-Hao, Taichung City (TW)
(72) Inventor: Lai, Shih-Hao, Taichung City (TW)
(74) Representative: Michalski Hüttermann & Partner Patentanwälte mbB

(57) **Abstract**

A torque sensing device comprises a torque sensor (30) and a transmission mechanism (20). The torque sensor includes an outer tube (31) and a first strain gauge (32). The outer tube (31) has a main tube part (311) and a first deformable part (33). The main tube part is connected to and surrounds a crankshaft of the transmission mechanism. The first deformable part is connected to the main tube part. The first deformable part extends circumferentially around the crankshaft between a first and a second side. The first deformable part has a first included angle (A1) defined between a first line extending through a center of the crankshaft and a first side and a second line extending through the center of the crankshaft and a second side. The first included angle is less than 180 degrees. The first strain gauge is attached to the first deformable part.

## Description

### BACKGROUND OF THE INVENTION

The present invention relates to a sensing device and, more particularly, to a torque sensing device configured for electric assisted bicycles.

TW Patent No. M621992 discloses a torque sensing device comprising a torque sensor, a signal receiver, and a signal transmitter. The torque sensor is attached to a tube. The tube is connectible to an end of a BB rotating shaft of a gear plate such that the torque sensor is adapted to sense a torque applied to the BB rotating shaft. The signal receiver is attached to the BB rotating shaft and electrically connected to the torque sensor to collect a torque signal. The signal transmitter is attached to the BB rotating shaft and includes a transmitting circuit board. The torque sensor has a strain gauge configured to measure the deformation of the BB rotating shaft being subjected to a torque force. Further, the torque sensor is adapted to convert the degree of the deformation into a torque measurement. However, in a case when the deformation is small, the final torque signal collected by the torque sensor is prone to errors.

The present invention is, therefore, intended to obviate or at least alleviate the problems encountered in the prior art.

### SUMMARY OF THE INVENTION

According to the present invention, a torque sensing device configured for electric assisted bicycles according to claim 1 is presented and comprises a transmission mechanism and a torque sensor. The transmission mechanism has a crankshaft. The torque sensor includes an outer tube and a first strain gauge. The outer tube has a main tube part and a first deformable part. The outer tube is connected to and surrounds the crankshaft. The first deformable part is joined to an end of the main tube part in a direction parallel to an axial direction of the crankshaft. The first deformable part has a first and a second side and extends circumferentially around the crankshaft between the first and the second sides. The first deformable part has a first included angle defined between a first line extending through a center of the crankshaft and the first side and a second line extending through the center of the crankshaft and the second side. The first included angle is less than 180 degrees. The first strain gauge is attached to the first deformable part.

Other objectives, advantages, and new features of the present invention will become apparent from the following detailed description of the invention when considered in conjunction with the accompanied drawings.

### BRIEF DESCRIPTION OF DRAWINGS

FIG. 1 is a perspective view of a torque sensing device configured for electric assisted bicycles according to the present invention.
FIG. 2 is an exploded perspective view of the torque sensing device of FIG. 1.
FIG. 3 is a side view of an outer tube of the torque sensing device of FIG. 1.
FIG. 4 is another side view of the outer tube of the torque sensing device of FIG. 1.
FIG. 5 is a cross-sectional view of the torque sensing device of FIG. 1.
FIG. 6 is a cross-sectional view taken along line 6-6 of FIG. 5.

### DETAILED DESCRIPTION OF THE INVENTION

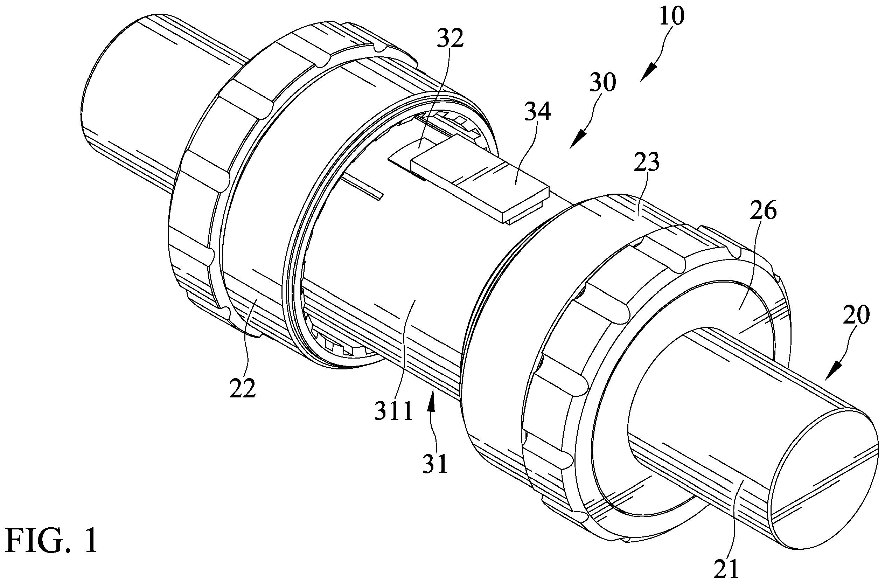

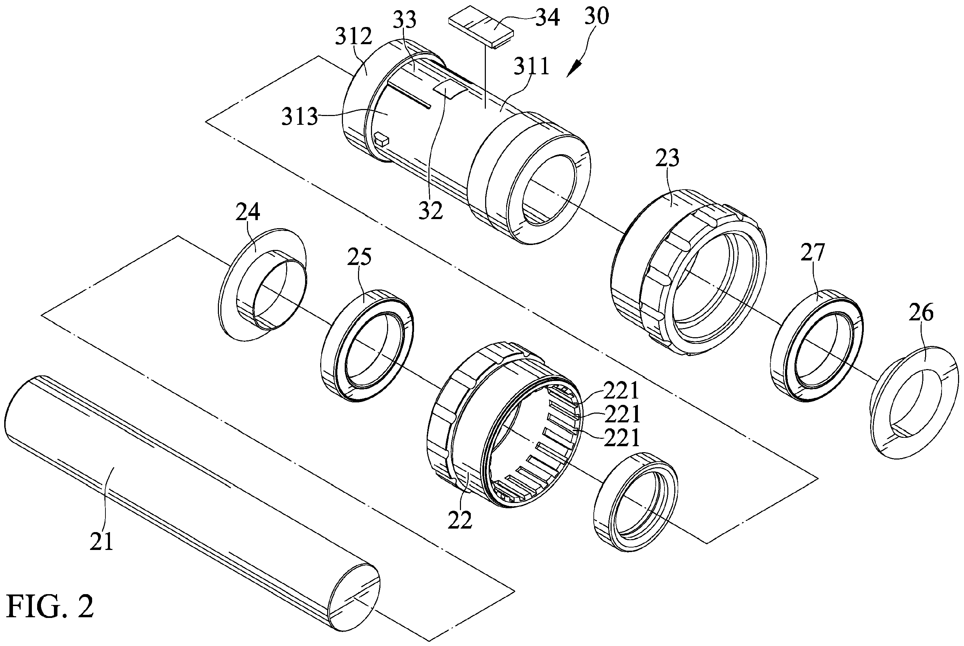

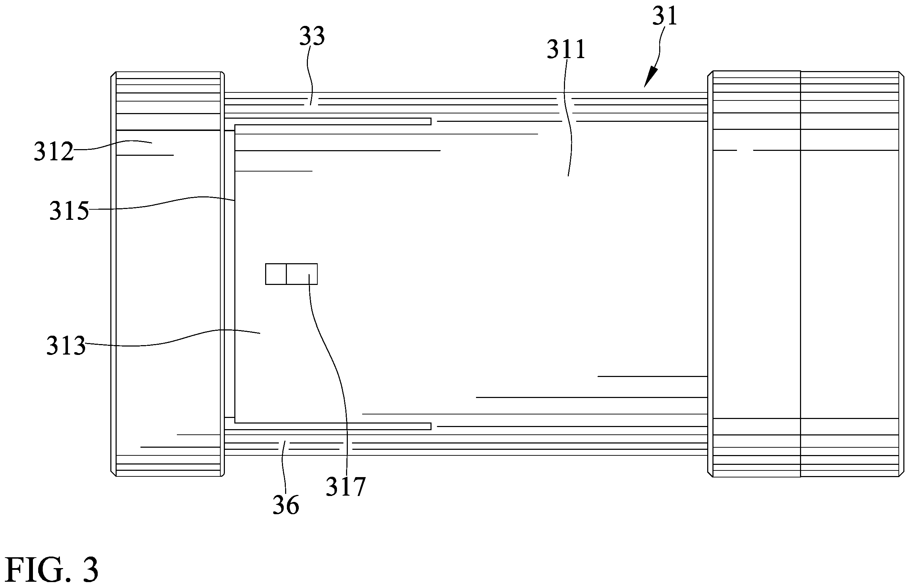

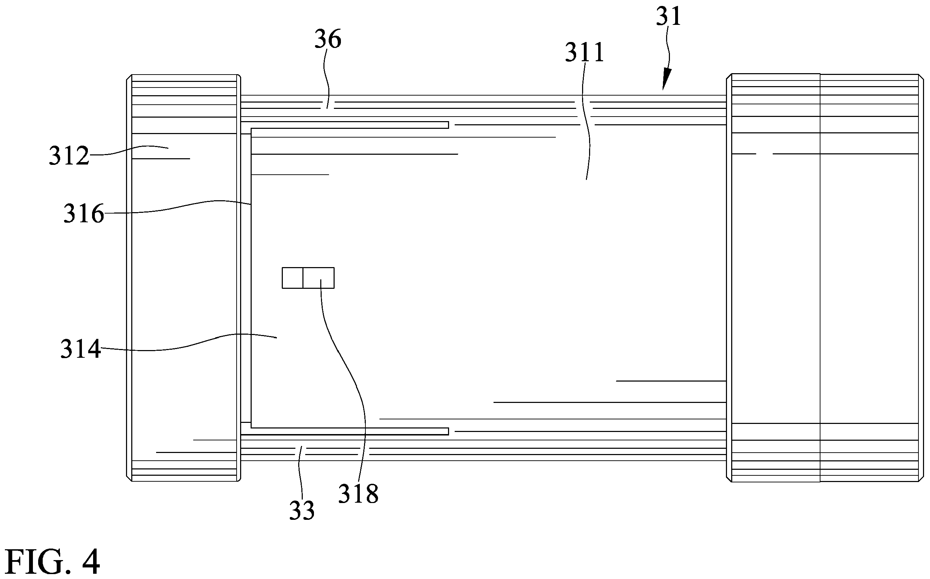

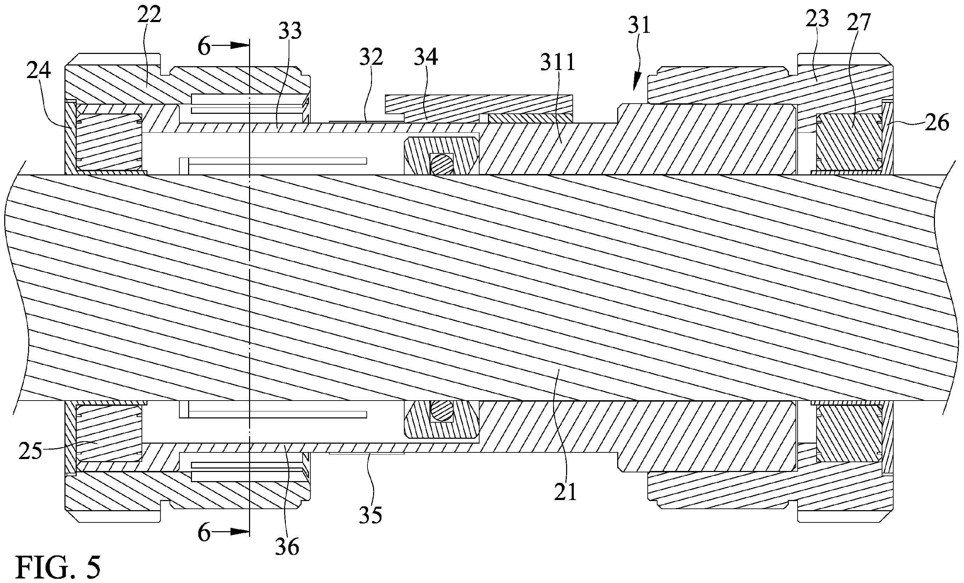

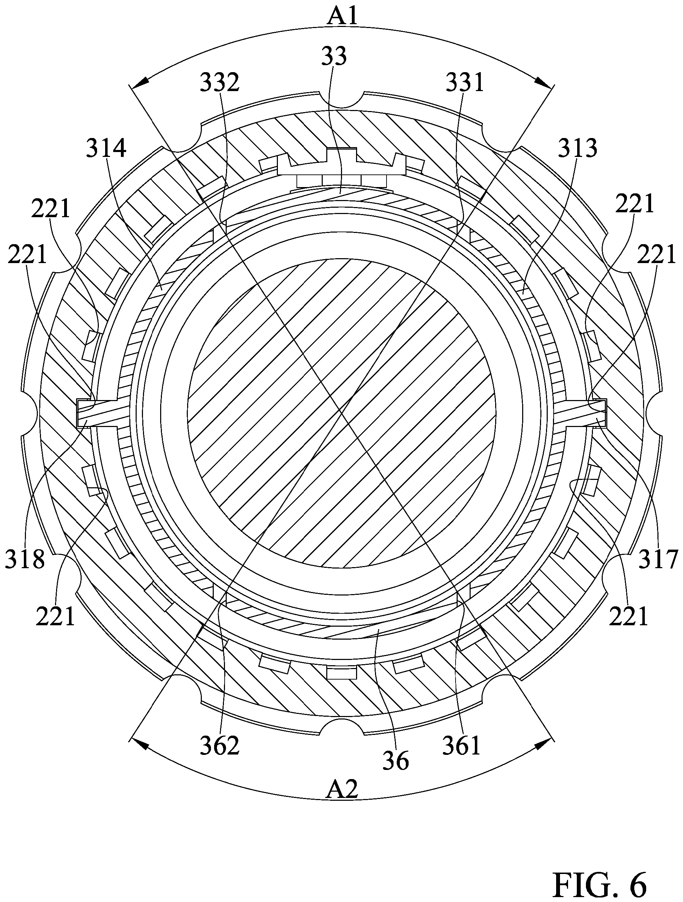

FIGS. 1-6 show a torque sensing device 10 configured for electric assisted bicycles according to the present invention comprises a transmission mechanism 20 and a torque sensor 30.

The transmission mechanism 20 includes a crankshaft 21 and a first and a second bearing seat 24 and 26 respectively configured to support a first and a second bearing 25 and 27 that are configured for the crankshaft 21. The first and the second bearing seats 24 and 26 are connected to and surrounds the crankshaft 21.

The torque sensor 30 includes an outer tube 31, a first strain gauge 32, and a second strain gauge 35. The outer tube 31 has a main tube part 311, a first deformable part 33, and a second deformable part 36. The outer tube 31 is connected to and surrounds the crankshaft 21. First ends of the first and the second deformable parts 33 are joined to an end of the main tube part 311 in a direction parallel to an axial direction of the crankshaft 21. The first and the second deformable parts 33 and 36 are on opposite sides of the crankshaft 21 in a radial direction. The first deformable part 33 has a first and a second side 331 and 332 and extends circumferentially around the crankshaft 21 between the first and the second sides 331 and 332. The first deformable part 33 has a first included angle A1 defined between a first line extending through a center of the crankshaft 21 and the first side 331 and a second line extending through the center of the crankshaft 21 and the second side 332. The first included angle is less than 180 degrees. Moreover, the first included angle A1 is greater than 30 degrees and less than 90 degrees. The second deformable part 36 has a third and a fourth side 361 and 362 and extends circumferentially around the crankshaft 21 between the third and the fourth sides 361 and 362. The second deformable part 36 has a second included angle A2 defined between a third line extending through the center of the crankshaft 21 and the third side 361 and a fourth line extending through the center of the crankshaft 21 and the fourth side 362. The second included angle is less than 180 degrees. Moreover, the second included angle A2 is greater than 30 degrees and less than 90 degrees.

Further, inner peripheries of the first and the second deformable parts 33 and 36 surround an outer periphery of the first bearing 25.

Further, an outer periphery of the outer tube 31 includes the first strain gauge 32 attached thereto. Moreover, the first strain gauge 32 is attached to the first deformable part 33. Further, a first end of the first strain gauge 32 is attached to the first deformable part 33 and a second end is attached to the main tube part 311. The outer periphery of the outer tube 31 also includes the second strain gauge 35 attached thereto. Moreover, the second strain gauge 35 is attached to the second deformable part 36. Further, a first end of the second strain gauge 35 is attached to the second deformable part 36 and a second end is attached to the main tube part 311.

Further, the torque sensor 30 includes a processing unit 34 configured to receive a signal of the first strain gauge 32. The processing unit 34 is connected to the first and the second strain gauges 32 and 35. The processing unit 34 is attached to the outer periphery of the outer tube 31.

Further, the outer tube 31 has a joint tube portion 312 and second ends of the first and the second deformable part 33 and 36, which are opposite the first ends of the first and the second deformable part 33 and 36, are connected to the joint tube portion 312 in the direction parallel to the axial direction of the crankshaft 21.

Further, the outer tube 31 has a first and a second extension part 313 and 314 and first ends of the first and the second extension parts 313 and 314 are joined to the end of the main tube part 311 in a direction parallel to the axial direction of the crankshaft 21 and second ends of the first and the second extension parts 313 and 314 are adjacent to the joint tube portion 312. The first and the second extension parts 313 and 314 are on opposite sides of the crankshaft 21 in a radial direction. The first extension part 313 extends circumferentially around the crankshaft 21 from a first side which is adjacent to the first side 331 of the first deformable part 33 to a second side which is adjacent to the third side 361 of the second deformable part 36. The second extension part 314 extends circumferentially around the crankshaft 21 from a first side which is adjacent to the second side 332 of the first deformable part 33 to a second side which is adjacent to the fourth side 362 of the second deformable part 36. The outer tube 31 defines a U-shaped first groove 315 next to the first side 331. The first groove 315 has a first section delimited between the first side 331 of the first deformable part 33 and the first side of the first extension part 313, a second section delimited between the second end of the first extension part 313 and the joint tube portion 312, and a third section delimited between the third side 361 of the second deformable part 36 and the second side of the first extension part 313. The outer tube 31 also defines a U-shaped second groove 316 next to the second side 332. The second groove 316 has a first section delimited between the second side 332 of the first deformable part 33 and the first side of the second extension part 314, a second section delimited between the second end of the second extension part 314 and the joint tube portion 312, and a third section delimited between the fourth side 362 of the second deformable part 36 and the second side of the second extension part 314.

Further, the transmission mechanism 20 includes a first and a second end cover 22 and 23 connected to and surrounding the outer tube 31 to prevent the crankshaft 21 and the outer tube 31 suffering undue deformations. The first and the second end covers 22 and 23 are at opposite ends of the main tube part 311. The first end cover 22 is connected to and surrounds the joint tube portion 312. An inner periphery of the first end cover 22 includes a plurality of first coupling structures 221, an outer periphery of the first extension part 313 includes a first engaging structure 317 configured to engage with one of the plurality of first coupling structures 221, and an outer periphery of the second extension part 314 includes a second engaging structure 318 configured to engage with another of the plurality of first coupling structures 221. One of each of the plurality of first coupling structures 221 and the first engaging structure 317 is in a form of a recess and the other of each of the plurality of first coupling structures 221 and the first engaging structure 317 is in a form of protuberance. One of each of the plurality of first coupling structures 221 and the second engaging structure 318 is in a form of a recess and the other of each of the plurality of first coupling structures 221 and the second engaging structure 318 is in a form of protuberance. An inner periphery of the second end cover 23 surrounds an outer periphery of the second bearing 27.

In view of the foregoing, each of the first and the second deformable parts 33 and 36 can deform accordingly and stably when the crankshaft 21 rotates. The first and the second strain gauges 32 and 35 can measure the amount of deformations of the first and the second deformable parts 33 and 36. As the crankshaft 21 rotates, it deflects up and down vertically and pushes the first and the second deformable parts 33 and 36 to deform. The torque sensor 30 can convert the amount of deformations of the crankshaft 21 into torque data quickly and accurately. The first and the second grooves 315 and 316 allow accurate movements of the deformable parts 33 and 36 and therefore accurate toques can be measured by the torque sensor 30. Additionally, the amount of deformation on the crankshaft 21 can be limited within a reasonable range through components such as the first and the second bearings 25 and 27 and end covers 22 and 23 to prevent undue deformations.

Although specific embodiments have been illustrated and described, numerous modifications and variations are still possible without departing from the scope of the invention. The scope of the invention is limited by the accompanying claims.

## Claims

1. A torque sensing device (10) configured for electric assisted bicycles comprising:
a transmission mechanism (20) including a crankshaft (21); and
a torque sensor (30) including an outer tube (31) and a first strain gauge (32), wherein the outer tube (31) has a main tube part (311) and a first deformable part (33), wherein the outer tube (31) is connected to and surrounds the crankshaft (21), wherein a first end of the first deformable part (33) is joined to an end of the main tube part (311) in a direction parallel to an axial direction of the crankshaft (21), wherein the first deformable part (33) has a first and a second side (331, 332) and extends circumferentially around the crankshaft (21) between the first and the second sides (331, 332), wherein the first deformable part (33) has a first included angle (A1) defined between a first line extending through a center of the crankshaft (21) and the first side (331) and a second line extending through the center of the crankshaft (21) and the second side (332), wherein the first included angle is less than 180 degrees, wherein the first strain gauge (32) is attached to the first deformable part (33), and wherein the outer tube (31) defines a first groove (315) next to the first side (331) and a second groove (316) next to the second side (332).

2. The torque sensing device (10) as claimed in claim 1, wherein a first end of the first strain gauge (32) is attached to the first deformable part (33) and a second end is attached to the main tube part (311).

3. The torque sensing device (10) as claimed in claim 1, wherein the torque sensor (30) includes a processing unit (34) configured to receive a signal of the first strain gauge (32), wherein the processing unit (34) is connected to the first strain gauge (32), and wherein the processing unit (34) is attached to the outer tube (31).

4. The torque sensing device (10) as claimed in claim 1, wherein the torque sensor (30) includes a second strain gauge (35), wherein the outer tube (31) has a second deformable part (36) with a first end joined to the end of the main tube part (311) in the direction parallel to the axial direction of the crankshaft (21), wherein the first and the second deformable parts (33, 36) are on opposite sides of the crankshaft (21) in a radial direction, wherein the second deformable part (36) has a third and a fourth side (361, 362) and extends circumferentially around the crankshaft (21) between the third and the fourth sides (361, 362), wherein the second deformable part (36) has a second included angle (A2) defined between a third line extending through the center of the crankshaft (21) and the third side (361) and a fourth line extending through the center of the crankshaft (21) and the fourth side (362), wherein the second included angle is less than 180 degrees, and wherein the second strain gauge (35) is attached to the second deformable part (36).

5. The torque sensing device (10) as claimed in claim 4, wherein the torque sensor (30) includes a processing unit (34) configured to receive a signal of the first and the second strain gauges (32, 35), wherein the processing unit (34) is connected to the first and the second strain gauges (32, 35), and wherein the processing unit (34) is attached to the outer tube (31).

6. The torque sensing device (10) as claimed in claim 1, wherein the first included angle (A1) is greater than 30 degrees and less than 90 degrees.

7. The torque sensing device (10) as claimed in claim 4, wherein the first included angle (A1) is greater than 30 degrees and less than 90 degrees, and wherein the second included angle (A2) is greater than 30 degrees and less than 90 degrees.

8. The torque sensing device (10) as claimed in claim 4, wherein the outer tube (31) has a first and a second extension part (313, 314) and first ends of the first and the second extension parts (313, 314) are joined to the end of the main tube part (311) in a direction parallel to the axial direction of the crankshaft (21), wherein the first extension part (313) are on opposite sides of the crankshaft (21) in a radial direction, wherein the first extension part (313) extends circumferentially around the crankshaft (21) from a first side which is adjacent to the first side (331) of the first deformable part (33) to a second side which is adjacent to the third side (361) of the second deformable part (36), wherein the second extension part (314) extends circumferentially around the crankshaft (21) from a first side which is adjacent to the second side (332) of the first deformable part (33) to a second side which is adjacent to the fourth side (362) of the second deformable part (36), wherein the first groove (315) has a first section delimited between the first side (331) of the first deformable part (33), and wherein the second groove (316) has a first section delimited between the second side (332) of the first deformable part (33) and the first side of the second extension part (314).

9. The torque sensing device (10) as claimed in claim 8, wherein the first groove (315) has a second section delimited between the third side (361) of the second deformable part (36) and the second side of the first extension part (313), and wherein the second groove (316) is defined with a second section delimited between the fourth side (362) of the second deformable part (36) and the second side of the second extension part (314).

10. The torque sensing device (10) as claimed in claim 9, wherein the outer tube (31) has a joint tube portion (312) and second ends of the first and the second deformable parts (33, 36), which are opposite the first ends of the first and the second deformable parts (33, 36), are connected to the joint tube portion (312) in the direction parallel to the axial direction of the crankshaft (21), wherein the first groove (315) has a third section delimited between the second end of the first extension part (313) and the joint tube portion (312), and wherein the second groove (316) has a third section delimited between the second end of the second extension part (314) and the joint tube portion (312).

11. The torque sensing device (10) as claimed in claim 10, wherein the transmission mechanism (20) includes a first end cover (22) connected to and surrounding the outer tube (31) to prevent the crankshaft (21) and the outer tube (31) suffering undue deformations, and wherein the first end cover (22) is connected to and surrounds the joint tube portion (312).

12. The torque sensing device (10) as claimed in claim 11, wherein the transmission mechanism (20) includes a second end cover (23) connected to and surrounding the outer tube (31) to prevent the crankshaft (21) and the outer tube (31) suffering undue deformations, wherein the second end cover (23) is connected to and surrounds the outer tube (31), and wherein the first and the second end covers (22, 23) are at opposite ends of the main tube part (311).

13. The torque sensing device (10) as claimed in claim 11, wherein an inner periphery of the first end cover (22) includes a plurality of first coupling structures (221), an outer periphery of the first extension part (313) includes a first engaging structure (317) configured to engage with one of the plurality of first coupling structures (221), and an outer periphery of the second extension part (314) includes a second engaging structure (318) configured to engage with another of the plurality of first coupling structures (221), wherein one of each of the plurality of first coupling structures (221) and the first engaging structure (317) is in a form of a recess and the other of each of the plurality of first coupling structures (221) and the first engaging structure (317) is in a form of protuberance, and wherein one of each of the plurality of first coupling structures (221) and the second engaging structure (318) is in a form of a recess and the other of each of the plurality of first coupling structures (221) and the second engaging structure (318) is in a form of protuberance.

14. The torque sensing device (10) as claimed in claim 4, wherein the transmission mechanism (20) includes a first and a second bearing seat (24, 26) respectively configured to support a first and a second bearing (25, 27) that are configured for the crankshaft (21), and wherein the first and the second bearing seats (24, 26) are connected to and surrounds the crankshaft (21).

15. The torque sensing device (10) as claimed in claim 14, wherein inner peripheries of the first and the second deformable parts (33, 36) surround an outer periphery of the first bearing (25).
